# EUROPEAN PATENT APPLICATION

(11) **EP 1 829 593 A1**
(43) Date of publication of application: **05.09.2007**
(21) Application number: 05791009.3
(22) Date of filing: 26.08.2005
(51) Int. Cl.: A63H 17/42

(54) **STOPPING DEVICE FOR A POSITIVE IGNITION ENGINE**

(30) Priority: 27.08.2004 ES 200402094
(71) Applicant: Bycmo RC Models, S.L., 08755 Castellbisbal (ES)
(72) Inventor: Andres Berenguer, Joan, E-08755 Castellbisbal (ES)
(74) Representative: Barroso Sánchez-Lafuente, Ignacio M.
(86) International application number: PCT/ES2005/000477
(87) International publication number: WO 2006/035086

(57) **Abstract**

The invention relates to a stopping device for a positive ignition engine. The inventive device comprises direct actuation means which act by means of friction on the flywheel (9) of the engine shaft. The aforementioned means comprises a second-class lever which is equipped with: a support point or fulcrum (3) which is disposed at one end on a fixed part of the engine or chassis, a power arm (1) which is disposed at the opposite end, and a resistance zone or point (2) which is disposed between the power arm and the support point (3) and which is designed to act by means of contact on the rotary part of the engine shaft (9). The actuation surface of the resistance zone or point has a complementary shape to that of the flywheel, which is used to ensure contact with the rotary part, and the power arm (1) has a zone that is adapted to the form and shape of the user's finger. The invention, which is particularly suitable for engines that are used to make model automobiles, can be used to stop the engine without the use of tools and with a high level of safety for the user.

## Description

### Technical field of the invention

This invention relates to a stopping device for a positive ignition engine, particularly suitable for scale model automobiles.

### Background of the invention

Model automobiles is a sector of modelling in which the radio-controlled models are replicas of real or fictitious vehicles. The vehicles move under their own power, and are controlled from a distance by the user, by means of radio wave transmitters and receivers.

Their mechanics is reasonably similar to that of real vehicles, as they are equipped with four-wheel drive or rear-wheel drive by means of differentials, universal joints, oil-filled dampers, disc brakes, etc.

The vehicles may be classified according to whether they are driven by an electric or a positive ignition engine.

Electric models are usually 1/10^{th}, 1/12^{th} or 1/20^{th} scale. The duration of the battery of these models is usually between 5 and 10 minutes. They may reach speeds of between 40 and 50 kilometres per hour. In order to control the speed of the engine, electronic variators are installed, and they are usually equipped with a brake.

In order to completely stop the electric engine of the vehicle, it is only necessary to break the engine's power supply circuit. This may be done by means of a simple button.

Positive ignition-engine models are usually of scales between 1/10^{th} and 1/4^{th}. The cylinder capacity of the engines depends on the scale of the model. The largest is 1/8 ^{th} scale, which has a 3.5 cc engine. The duration of the fuel held in the tank of these models is usually between 5 and 10 minutes. The fuel for these models is a mixture of methyl alcohol, synthetic oil and nitromethane, this last being present in the smallest proportion (10% to 30%) in the mixture, due to its being explosive.

In order to completely stop the positive ignition engine of the vehicle, it is necessary to use an external device which will stop the movement of the flywheel, and therefore cause the combustion process to cease. Normally, the user applies an indeterminate object or his/her own hand, neither of which options are recommendable, efficient or in the least safe.

### Explanation of the invention

This invention solves the drawbacks quoted above, also providing new technical characteristics which will be described below.

In this way, the object of this invention is a new stopping device for a positive ignition engine, which in essence is characterised in that it comprises direct actuation means which act by friction on a rotating section of the engine shaft.

Essentially, said actuation means are comprised of a second-class lever, consisting of:
- A support point or fulcrum, disposed at one end on a fixed part of the engine or chassis,
- A power arm, disposed at the opposite end, and
- A resistance zone or point, between the force and the support point, adapted to act by means of contact on the rotary part of the engine shaft.

In accordance with a preferred embodiment, said lever has its support point or fulcrum at one end, on a fixed part of the engine or chassis.

The actuation surface of the resistance zone or point has a complementary shape to that of the rotating part on which it acts, which is where the contact with said rotary part of the engine shaft is verified.

Preferably, this action surface is knurled.

The power arm may have a zone adapted to the size and shape of the finger of the user, for the greater comfort and efficiency of use.

In particular, the device of this invention has been devised to act on the flywheel of the engine shaft.

The device may comprise a removable joining means of the device to a part of the engine or chassis, in the region of its fulcrum.

### Brief description of the drawings

In the attached drawings, as a non-limitative example, an embodiment of the stopping device for a positive ignition engine, which is the object of the invention, is portrayed. In said drawings:
FIGURE 1 is a three-dimensional drawing which portrays a side view of the device and its arrangement with other elements of which the engine of the vehicle is comprised.
FIGURE 2 is another three-dimensional drawing, in accordance with a different perspective from that of FIGURE 1, which portrays a front view of the stopping device and its arrangement with the other elements of which the engine of the vehicle is comprised.
FIGURE 3 is a perspective view which portrays the stopping device which is the object of this invention in its normal resting position.
FIGURE 4 is a view analogous to that of FIGURE 3, but with the stopping device in its operative position of actuation on the flywheel.

### Description of preferred embodiments

In particular, this invention relates to a specific device for the stopping of a positive ignition engine whose particular application, although not limited to the same, is found in the stopping of the internal combustion engines fitted to model racing cars.

In accordance with the invention, a stopping device for an internal combustion engine is provided, which is comprised of an actuation means which acts on a rotary zone of the flywheel.

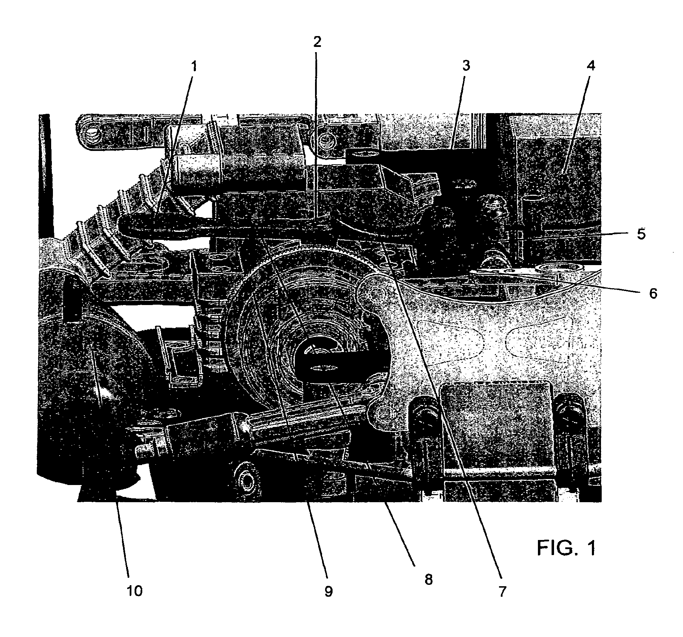

FIGURE 1 is a three-dimensional drawing which portrays a side view of the stopping device 8 comprised of:
- A power arm 1 at one end
- A support point or fulcrum 3 at the other end, and
- A resistance arm 2, at an intermediate point or zone between the two aforementioned elements.

For the better understanding of the invention, some elements which make up the engine of the vehicle and its surroundings have been included, such as:
- The steering servo 4,
- The crown wheel 6,
- The exhaust pipe 10, and
- The flywheel 9

The stopping device 8 portrayed acts as a second-class lever where the force 1 is applied by the user. The support point or fulcrum 3 is located at one end on a fixed part of the engine or chassis. The resistance point 2 is adapted in order to act on a rotary part of the engine shaft 9.

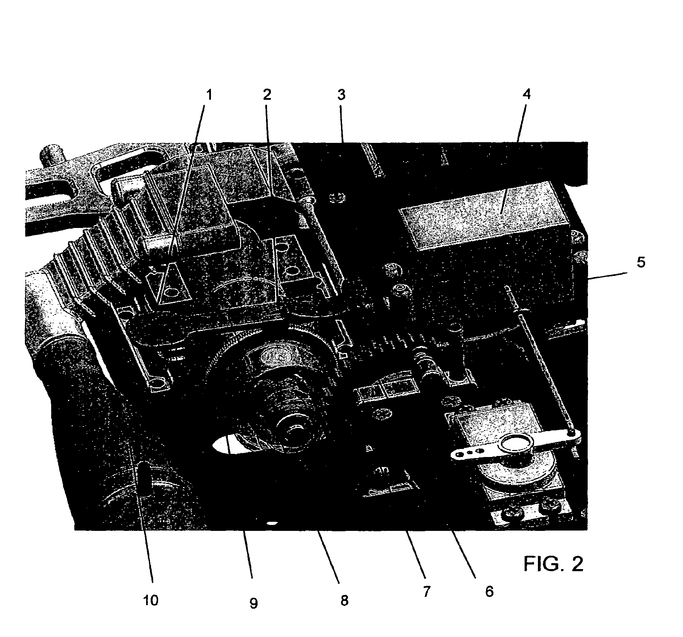

In FIGURE 2, another three-dimensional view from the front of the stopping device 8 and its arrangement with regard to other elements which comprise the engine of the vehicle, described above is portrayed, but from a slightly higher perspective, in order to complement understanding of the same.

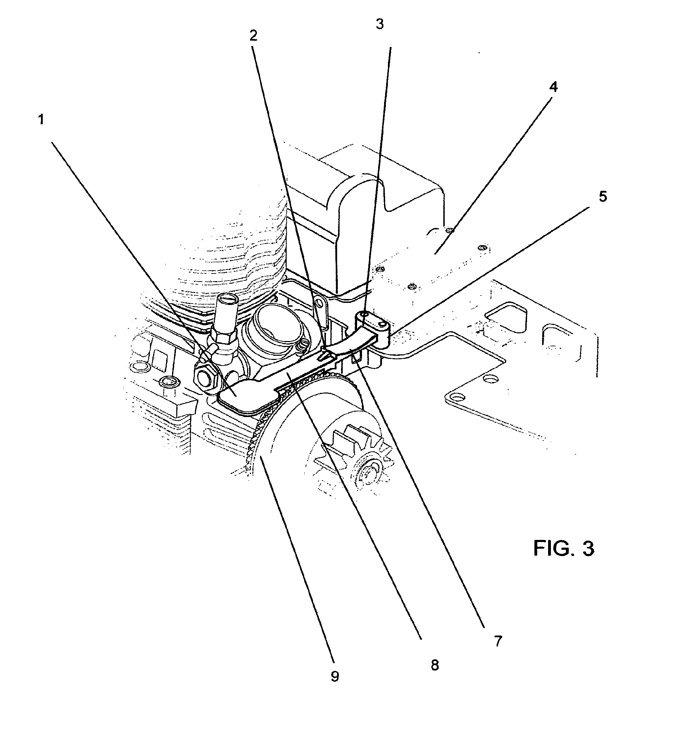

FIGURE 3 is a three-dimensional drawing which portrays a detailed front view of the stopping device 8 in its normal resting position, that is to say, a neutral position wherein the stopping device 8 does not act in any way on the flywheel 9.

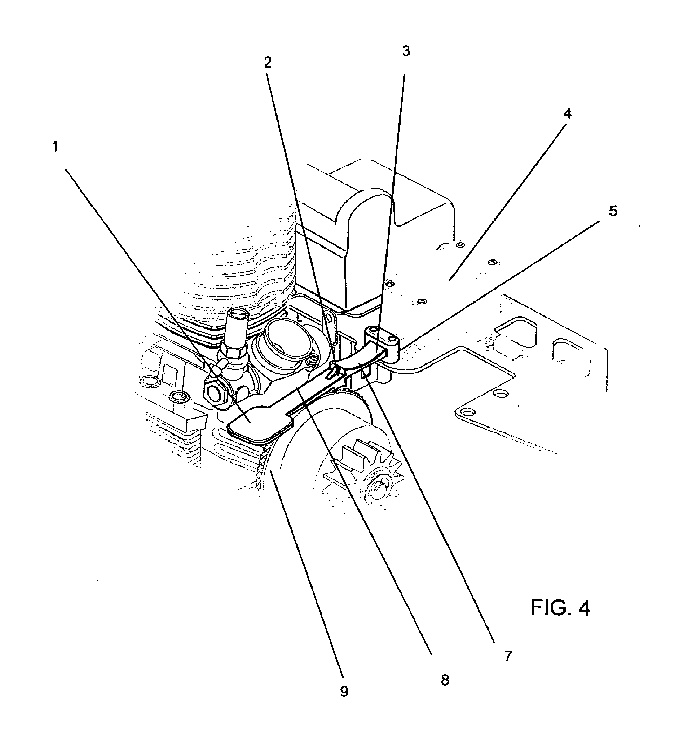

FIGURE 4 is a three-dimensional drawing which portrays a detailed front view of the stopping device 8 in its position of acting on the flywheel 9, that is to say, in the operating position where the user applies force to the power arm 1 and said device 8 applies resistance to the rotating motion of the flywheel 9 and the motor stops.

The stopping device 8 is comprised of a single part; it may be anchored to the engine or to the chassis by a joining means, which may be by means of screws, at its endpoint 5. The part which comprises the resistance arm 2 leading to the support point 3 features a concave section 7, as shown in the profile of FIGURE 1. The part of the resistance arm features a certain increase in its thickness 2 in order to be able to act on the flywheel 9, and a shape which is approximately complementary to that of the external edge of the circumference of the flywheel 9.

Specifically, due to its particular interest, the stopping device 8 allows its end 1 to be pressed by the user's finger. Then, the protrusion existing at the central section of the central attack zone or point of resistance 2, acts by means of direct friction on the flywheel 9, preventing its rotation and stopping the engine.

As is known, the braking force will be a force which is tangential to the contact surface between the flywheel 9 and the resistance zone 2 of the stopping device 8, whose value will be directly proportional to the force exerted by the user on the power arm 1, multiplied by the coefficient of dynamic friction µ_{g} between the metal of the flywheel 9 and the material of the stopping device 8.

Furthermore, the measurements of the power zone of the stopping device 8 are adapted to the size of a finger of the user; there is a certain broadening of the power arm 1. In this way, when the user exerts pressure on the power arm 1, the stopping device 8 begins to act on the flywheel 9 in its operating position, as portrayed in FIGURE 4.

Thus, one of the problems which this invention solves is to be able to stop the engine in a simple, safe manner. Without the application of this invention, the user must apply an indeterminate object or his/her own hand in order to stop the engine, methods which are rather unreliable and not in the least safe.

In particular, though without being limited to the same, the device has been designed to be manufactured from a plastic material, and in a single unit.

The nature of this invention having been sufficiently disclosed, likewise the method for putting the same into practice, let it be known that everything which does not alter, change or modify its basic principle is subject to variations of detail.

## Claims

1. A stopping device (8) for an internal combustion engine, **characterised in that** it comprises a direct actuation means by friction on a rotary part of the engine shaft.

2. A device according to claim 1, **characterised in that** said actuation means is comprised of a second-class lever, consisting of:
• A support point or fulcrum (3), arranged at one end on a fixed part of the engine or chassis,
• A power arm (1) at the other end, and
• A resistance point or zone (2), disposed between the force and the support point (3) and adapted to act by means of contact on the rotary part of the engine shaft (9).

3. A device according to claim 2, **characterised in that** the actuation surface of the resistance point or zone (2) has a shape which is complementary to the rotary part (9) on which it acts; this is where the contact with said rotary part of the engine shaft (9) is verified.

4. A device according to claim 3, **characterised in that** said actuation surface (2) is knurled.

5. A device according to claims 2 to 3, **characterised in that** the power arm (1) features an area adapted in shape and size to the finger of the user.

6. A device according to any preceding claims, **characterised in that** the material from which the same is manufactured is of a plastic type.

7. A device according to any preceding claims, **characterised in that** the rotary part of the engine shaft is the flywheel (9).

8. A device according to any preceding claims, **characterised in that** it comprises a removable joining means (5) of the device to a fixed part of the engine or chassis, in the region of its fulcrum (3).
